# EUROPEAN PATENT APPLICATION

(11) **EP 4 779 165 A1**
(43) Date of publication of application: **22.07.2026**
(21) Application number: 24865411.3
(22) Date of filing: 09.09.2024
(51) Int. Cl.: F16C 17/04

(54) **SLIDING COMPONENT**

(30) Priority: 14.09.2023 JP 2023148892
(71) Applicant: Eagle Industry Co., Ltd., Minato-ku Tokyo 105-8587 (JP)
(72) Inventor: OU, Iwa, Tokyo 105-8587 (JP)
(74) Representative: WSL Patentanwälte Partnerschaft mbB
(86) International application number: PCT/JP2024/032254
(87) International publication number: WO 2025/057911

(57) **Abstract**

To provide a sliding component having high floating effect.

A sliding component 3 is disposed between a housing 2 and a shaft 1 extending through the housing 2, and has a pair of sliding surfaces 11, 21 that rotate relative to each other. At least one of the sliding surfaces 11 is provided with a dynamic pressure generating groove 13 having an introduction portion 14 on a radially outer side that communicates with an outer space S1 and an introduction portion 15 on a radially inner side that communicates with an inner space S2, and a tip portion 17B where both the introduction portions 14, 15 meet on a relative rotation downstream side. The dynamic pressure generating groove 13 is shallower on a side of the tip portion 17B than on a side of the introduction portion 14 and a side of the introduction portion 15.

## Description

### {TECHNICAL FIELD}

The present invention relates to a sliding component having a pair of sliding surfaces that rotate relative to each other and are used for, for example, a shaft sealing device sealing a rotating shaft of a rotating machine in an automotive seal field, a general industrial machinery seal field, or another seal field or a bearing of a machine in an automotive bearing field, a general industrial machinery bearing field, or another bearing field.

### {BACKGROUND ART}

Some bearing devices for supporting a rotating shaft have a thrust bearing that rotatably supports the rotating shaft in a thrust direction. In such a thrust bearing, reduction in energy lost due to sliding has been desired for environmental reasons, or the like in recent years.

For example, the thrust bearing described in Patent Citation 1 includes an annular sliding ring fixed to a rotating shaft and an annular sliding ring provided on a housing side. A sliding surface of the sliding ring on the housing side has a plurality of herringbone-shaped dynamic pressure grooves formed in a circumferential direction, which has generally V-shape when viewed in the axial direction. The dynamic pressure grooves have a constant depth, with their tops facing a relative rotation downstream side. The radially outer ends of the dynamic pressure grooves are in communication with a radially-outer-side space, and the radially inner ends thereof are in communication with a radially-inner-side space. The radially-outer-side space and the radially-inner-side space, namely the housing interior, are filled with lubricating oil.

When the rotating shaft rotates, the lubricating oil is supplied from the radially outer ends and the radially inner ends of the dynamic pressure grooves, generating dynamic pressure at the tops of the dynamic pressure grooves. This dynamic pressure effect causes the sliding ring on the rotating shaft side to float slightly relative to the sliding ring on the housing side in the direction where the sliding surfaces are spaced apart from each other, allowing the lubricating oil to flow in, improving lubrication.

### {CITATION LIST}

### {Patent Literature}

Patent Citation 1: JP 2007-327545 A (Page 7, FIG. 2)

### {SUMMARY OF INVENTION}

### {Technical Problem}

In thrust bearings such as that described in Patent Citation 1, the circumferential length of the dynamic pressure grooves is increased to introduce a large amount of lubricating oil from the radially-outer-side space and the radially-inner-side space, allowing large positive pressure to be generated. However, the positive pressure is generated at the tops of the dynamic pressure grooves, and the locations where the positive pressure is generated on the sliding surface are dispersed in the circumferential direction, and there is a risk of not achieving sufficient floating effect.

The present invention has been made in view of such problems, and an object of the present invention is to provide a sliding component having high floating effect.

### {Solution to Problem}

In order to solve the foregoing problems, a sliding component according to the present invention is disposed between a housing and a shaft that extends through the housing and having a pair of sliding surfaces that rotate relative to each other, wherein one of an outer diameter side space and an inner diameter side space of the sliding surfaces is a first space, remaining one of the outer diameter side space and the inner diameter side space of the sliding surfaces is a second space, at least one of the sliding surfaces is provided with a dynamic pressure generating groove having a first introduction portion that is disposed on a first space side and that communicates with the first space, a second introduction portion that is disposed on a second space side and that communicates with the second space, and a tip portion where the first introduction portion and the second introduction portion meet on a relative rotation downstream side, and the dynamic pressure generating groove is shallower on a side of the tip portion than on a side of the first introduction portion and on a side of the second introduction portion. According to the aforesaid feature of the present invention, as the fluid introduced from the first introduction portion and the second introduction portion moves toward the tip portion side, the pressure is increased, so that positive pressure can be increased over a wide range in the circumferential direction.

It may be preferable that the dynamic pressure generating groove is gradually shallower from at least one of the first introduction portion and the second introduction portion toward the tip portion. According to this preferable configuration, the pressure can be gradually increased.

It may be preferable that the tip portion has a bottom surface connected to a top surface of a land smoothly and curvedly in a circumferential direction. According to this preferable configuration, the fluid flowing in the circumferential direction is likely to be guided in the circumferential direction.

It may be preferable that the tip portion has a bottom surface connected to a top surface of a land smoothly and curvedly in a radial direction. According to this preferable configuration, the fluid flowing in the circumferential direction is likely to be guided also in the radial direction.

It may be preferable that an inclination angle of a bottom surface of at least one of the first introduction portion and the second introduction portion with respect to a top surface of a land is larger than an inclination angle of a bottom surface of the tip portion with respect to the top surface of the land. According to this preferable configuration, the fluid in the at least one of the first introduction portion and the second introduction portion is likely to be guided to the tip portion, and the tip portion where positive pressure is generated can be secured to a large extent in the circumferential direction.

It may be preferable that at least one of the first introduction portion and the second introduction portion is disposed along a radial direction, and the tip portion is disposed along a circumferential direction. According to this preferable configuration, the tip portion where pressure is generated can be secured widely in the circumferential direction.

It may be preferable that the tip portion is tapered toward a tip end thereof. According to this preferable configuration, large positive pressure can be generated at the tip of the tip portion.

It may be preferable that the first introduction portion is wider and longer than the second introduction portion. According to this preferable configuration, since the volume of the first introduction is larger than the volume of the second introduction portion, a larger amount of fluid in the first space can be introduced.

It may be preferable that the tip portion is deeper on the side of the first introduction portion than on the side of the second introduction portion. According to this preferable configuration, a large amount of fluid can be introduced from the first introduction portion, and positive pressure is likely to be generated on the other side of the tip portion.

### {BRIEF DESCRIPTION OF DRAWINGS}

FIG. 1 is a longitudinal sectional view illustrating an example of a thrust bearing as a sliding component according to a first embodiment of the present invention.
FIG. 2 is a view of a sliding surface of a stationary ring in the first embodiment as seen in the axial direction.
FIG. 3 is an enlarged view of the sliding surface of the stationary ring in the first embodiment as seen in the axial direction.
FIG. 4 is a schematic sectional view taken along a tip portion of a tip-side groove portion from a radially-inner-side introduction groove portion in the first embodiment.
FIG. 5A is a cross-sectional view taken along line A-A in FIG. 4, and FIG. 5B is a cross-sectional view taken along line B-B therein.
FIG. 6 is an explanatory diagram of the movement of fluid within a dynamic pressure generating groove during forward rotation, as seen in the axial direction, on the sliding surface of the stationary ring in the first embodiment.
FIG. 7 is an explanatory diagram illustrating the pressure distribution in the dynamic pressure generating groove in the first embodiment.
FIG. 8A is a schematic sectional view taken along a tip portion of a tip-side groove portion from a radially-inner-side introduction groove portion of a sliding component according to a second embodiment of the present invention, FIG. 8B is a cross-sectional view taken along line C-C in FIG. 8A, and FIG. 8C is a cross-sectional view taken along line D-D therein.
FIG. 9 is an enlarged view of a sliding surface of a stationary ring of a sliding component according to a third embodiment of the present invention as seen in the axial direction.
FIG. 10 is a schematic sectional view taken along a tip portion of a junction from a radially-inner-side inclined groove portion of a sliding component according to a fourth embodiment of the present invention.
FIG. 11 is an enlarged view of a sliding surface of a stationary ring of a sliding component according to a fifth embodiment of the present invention as seen in the axial direction.
FIG. 12 is an enlarged view of an inner peripheral surface of a radial bearing as a sliding component according to a sixth embodiment of the present invention as seen in the axial direction.

### {DESCRIPTION OF EMBODIMENTS}

Modes for implementing a sliding component according to the present invention will be described below based on embodiments.

### {First embodiment}

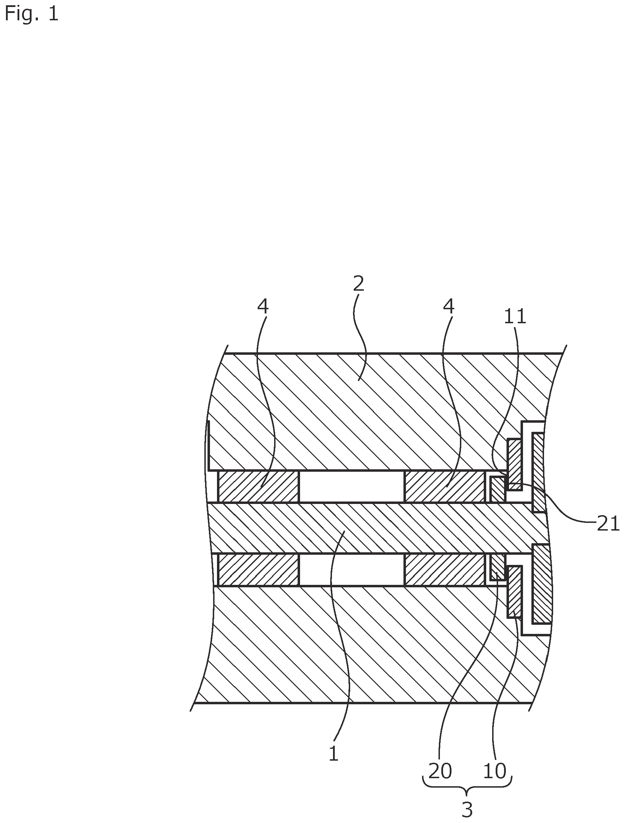

A sliding component according to a first embodiment of the present invention will be described with reference to FIGS. 1 to 7. Incidentally, in the present embodiment, a mode in which the sliding component is a thrust bearing will be described as an example. In addition, a mode in which the same lubricating oil is present in the interior and outer spaces of the thrust bearing will be described.

As illustrated in FIG. 1, a bearing device of the present embodiment mainly includes a rotating shaft 1, a housing 2, a thrust bearing 3, and radial bearings 4.

The housing 2 has a cylindrical shape, through which the rotating shaft 1 extends. The radial bearings 4 are disposed spaced apart from each other in an axial direction between the rotating shaft 1 and the housing 2. The radial bearings 4 allow rotation of the rotating shaft 1 while restricting tilt.

The thrust bearing 3 is disposed on one side of the radial bearings 4 in the axial direction on the rotating shaft 1. The thrust bearing 3 mainly includes an annular stationary ring 10 and an annular rotating ring 20 as sliding components.

The rotating ring 20 is provided on the rotating shaft 1 to be rotatable together with the rotating shaft 1. The stationary ring 10 is fixed to the housing 2 in a non-rotating state. A sliding surface 11 of the stationary ring 10 and a sliding surface 21 of the rotating ring 20 are adapted to slide closely against each other. Incidentally, the sliding surface 21 of the rotating ring 20 is a flat surface which has no recesses such as grooves.

The stationary ring 10 and the rotating ring 20 are typically formed of SiC (as an example of hard material) or a combination of SiC and carbon (as an example of soft material); however, the present invention is not limited thereto, any sliding material can be applied insofar as it is used as a sliding material for bearings. Incidentally, SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

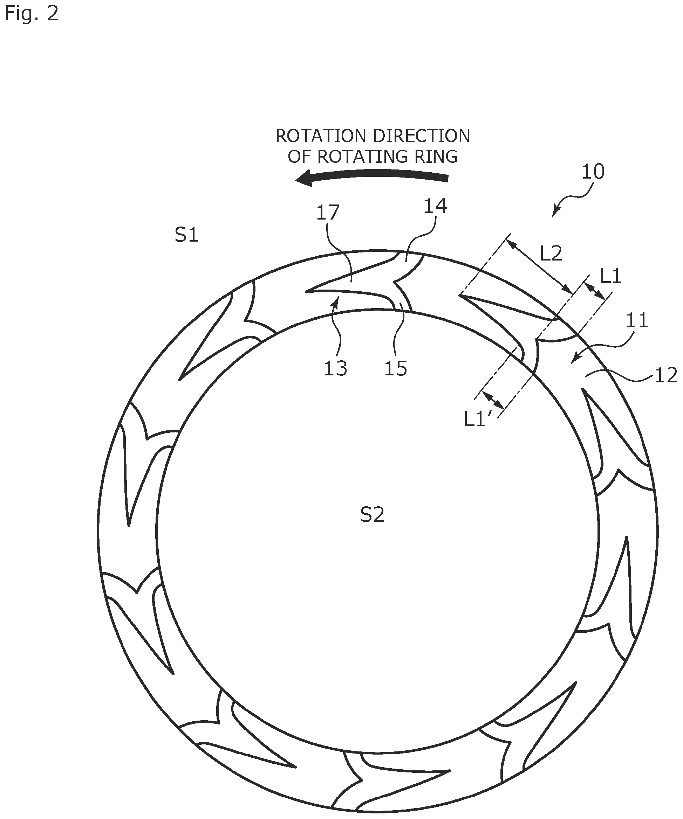

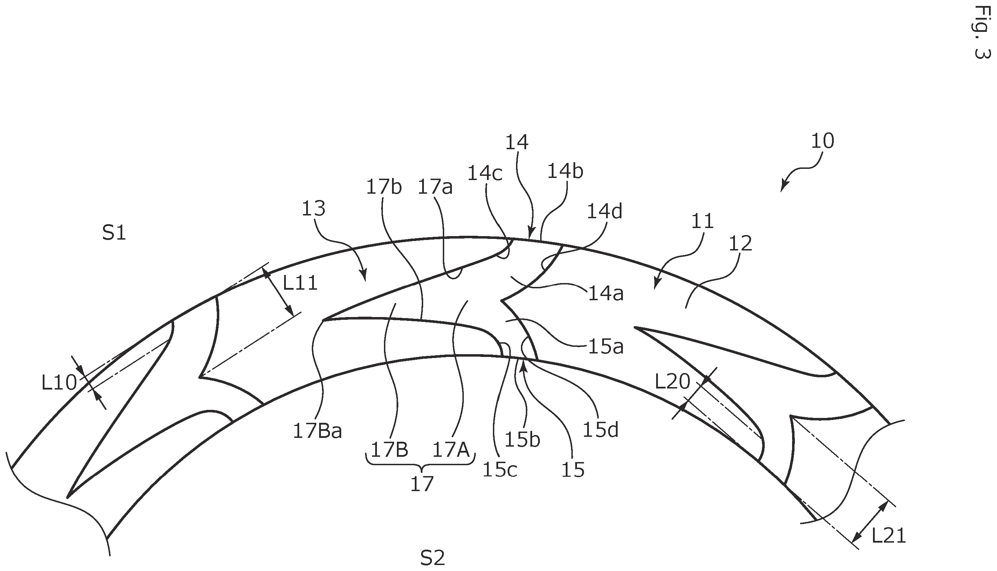

As illustrated in FIGS. 2 and 3, the rotating ring 20, which is a mating sliding component, slides counterclockwise relative to the stationary ring 10 as indicated by the solid arrow. Hereinafter, the description will be made based on the assumption that the rotation direction indicated by the solid arrow is a forward rotation direction.

The sliding surface 11 of the stationary ring 10 has a plurality of dynamic pressure generating grooves 13 (ten in this embodiment) equiangularly arranged in a circumferential direction. Incidentally, a portion of the sliding surface 11 other than the dynamic pressure generating grooves 13 forms lands 12 that form flat surfaces.

The dynamic pressure generating grooves 13 include radially-outer-side introduction groove portions 14 as introduction portions on one side, radially-inner-side introduction groove portions 15 as introduction portions on the other side, and tip-side groove portions 17, and are socalled herringbone-shaped grooves that have substantially V-shapes when viewed in the axial direction.

As illustrated in FIG. 3, the radially-outer-side introduction groove portions 14 are in communication with an outer space S1 as one space, and extend in a radially inward direction while being inclined in the forward rotation direction when viewed in the axial direction.

The radially-outer-side introduction groove portions 14 have substantially arc shapes that are protruded toward the radially inner side when viewed in the axial direction. The radially-outer-side introduction groove portions 14 have radially inner ends 14a facing substantially in the forward rotation direction and being wider than radially outer ends 14b.

In addition, side walls 14c of the radially-outer-side introduction groove portions 14 on a relative rotation downstream side have greater curvature than side walls 14d of the radially-outer-side introduction groove portions 14 on a relative rotation upstream side. Incidentally, the curvature here refers to the average curvature. The same applies below.

A radial length L10 of the side walls 14c is shorter than a radial length L11 of the side walls 14d. In the present embodiment, the side walls 14c have inflection points, whereas the side walls 14d have no inflection points and have the substantially constant curvature. Incidentally, the curvature of the side walls 14c, 14d may be constant or may vary.

The radially-inner-side introduction groove portions 15 are in communication with an inner space S2 as the other space, and extend in a radially outward direction while being inclined in the forward rotation direction when viewed in the axial direction.

The radially-inner-side introduction groove portions 15 have substantially arc shapes that are protruded toward the radially outer side when viewed in the axial direction. The radially-inner-side introduction groove portions 15 have radially outer ends 15a facing substantially in the forward rotation direction and being wider than radially inner ends 15b.

Specifically, side walls 15c of the radially-inner-side introduction groove portions 15 on the relative rotation downstream side have greater curvature than side walls 15d of the radially-inner-side introduction groove portions 15 on the relative rotation upstream side.

A radial length L20 of the side walls 15c is shorter than a radial length L21 of the side walls 15d. In the present embodiment, the side walls 15c have inflection points, whereas the side walls 15d have no inflection points and have the substantially constant curvature. In addition, the side walls 14d and the side walls 15d are connected in a substantially V-shape when viewed in the axial direction. Incidentally, the curvature of the side walls 15c, 15d may be constant or may vary.

The tip-side groove portions 17 include junctions 17A where the radially inner ends 14a of the radially-outer-side introduction groove portions 14 and the radially outer ends 15a of the radially-inner-side introduction groove portions 15 meet and tip portions 17B extending in the forward rotation direction from the junctions 17A. Incidentally, in the present embodiment, the tip portions 17B are positive pressure generating regions as described later, and the junctions 17A are located on the relative rotation upstream side of the tip portions 17B and are regions where no positive pressure is generated.

The tip-side groove portions 17 are tapered in the forward rotation direction from the junctions 17A toward the tip portions 17B when viewed in the axial direction. The tip portions 17B have tips 17Ba disposed in the vicinity of the center of the sliding surface 11 in a radial direction.

The tip-side groove portions 17 have components in the circumferential direction greater than components in the radial direction compared to the radially-outer-side introduction groove portions 14 and the radially-inner-side introduction groove portions 15, and the radially-outer-side introduction groove portions 14 and the radially-inner-side introduction groove portions 15 have components in the radial direction greater than components in the circumferential direction compared to the tip-side groove portions 17. In other words, the radially-outer-side introduction groove portions 14 and the radially-inner-side introduction groove portions 15 are disposed along the radial direction compared to the tip-side groove portions 17, and the tip-side groove portions 17 are disposed along the circumferential direction compared to the radially-outer-side introduction groove portions 14 and the radially-inner-side introduction groove portions 15. Therefore, a circumferential dimension L1 of the radially-outer-side introduction groove portions 14 and a circumferential dimension L1' of the radially-inner-side introduction groove portions 15 are reduced, a circumferential dimension L2 of the tip-side groove portions 17 can be longer in the circumferential direction than the circumferential dimensions L1, L1' (see FIG. 2). Accordingly, a large number of the dynamic pressure generating grooves 13 can be disposed in the circumferential direction.

Side walls 17a of the tip-side groove portions 17 on the radially outer side are substantially arc-shaped and are protruded toward the radially inner side, and have a smaller and gentler curvature than that of the side walls 14c of the radially-outer-side introduction groove portions 14. In addition, the side walls 17a of the tip-side groove portions 17 have a smaller and gentler curvature than that of the side walls 14d of the radially-outer-side introduction groove portions 14.

Side walls 17b of the tip-side groove portions 17 on the radially inner side are substantially arc-shaped and are protruded toward the radially outer side, and have a smaller and gentler curvature than that of the side walls 15c of the radially-inner-side introduction groove portions 15. In addition, the side walls 17b of the tip-side groove portions 17 have a smaller and gentler curvature than that of the side walls 15d of the radially-inner-side introduction groove portions 15.

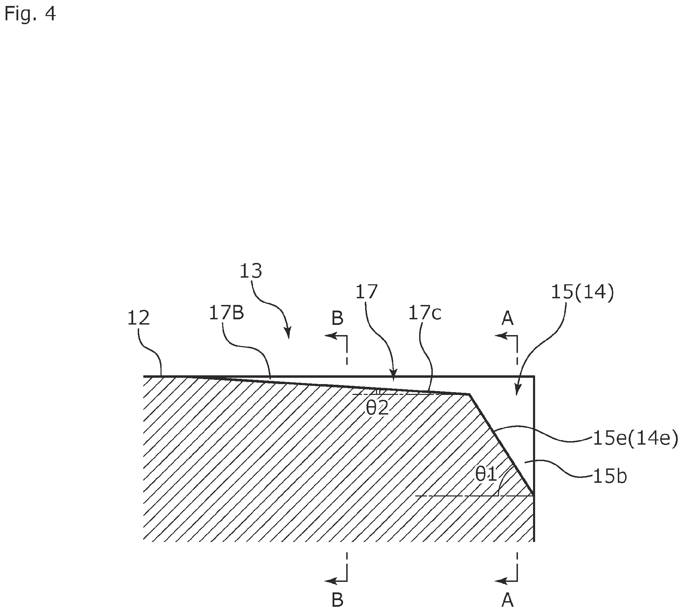

FIG. 4 is a sectional view taken along the extending direction of a portion from the radially-inner-side introduction groove portions 15 to the tip portions 17B of the tip-side groove portions 17. Incidentally, the shape of the radially-outer-side introduction groove portions 14 in the depth direction is almost the same as the shape of the radially-inner-side introduction groove portions 15 in the depth direction, and therefore a detailed description thereof will be omitted.

As illustrated in FIG. 4, the dynamic pressure generating grooves 13 are shallower on the side of the tip portions 17B than on the radially-inner-side introduction groove portions 15.

Specifically, bottom surfaces 15e of the radially-inner-side introduction groove portions 15 are inclined to be gradually shallower toward bottom surfaces 17c of the tip-side groove portions 17. Namely, the radially-inner-side introduction groove portions 15 are deepest at the radially inner ends 15b. The bottom surfaces 15e form flat surfaces.

In addition, the bottom surfaces 17c of the tip-side groove portions 17 are inclined to be gradually shallower toward the lands 12. The bottom surfaces 17c form flat surfaces.

The bottom surfaces 17c of the tip-side groove portions 17 are connected to the lands 12 in the circumferential direction in a smooth curve. Namely, no surfaces rising in the depth direction are formed between the tip-side groove portions 17 and the lands 12 located in the forward rotation direction of the tip-side groove portions 17.

An inclination angle θ1 of the bottom surfaces 15e of the radially-inner-side introduction groove portions 15 is larger than an inclination angle θ2 of the bottom surfaces 17c of the tip-side groove portions 17. The same is applied to the bottom surfaces 14e of the radially-outer-side introduction groove portions 14. Namely, the depth of the tip-side groove portions 17 can be shallower, ensuring a wider positive pressure generating region as described later.

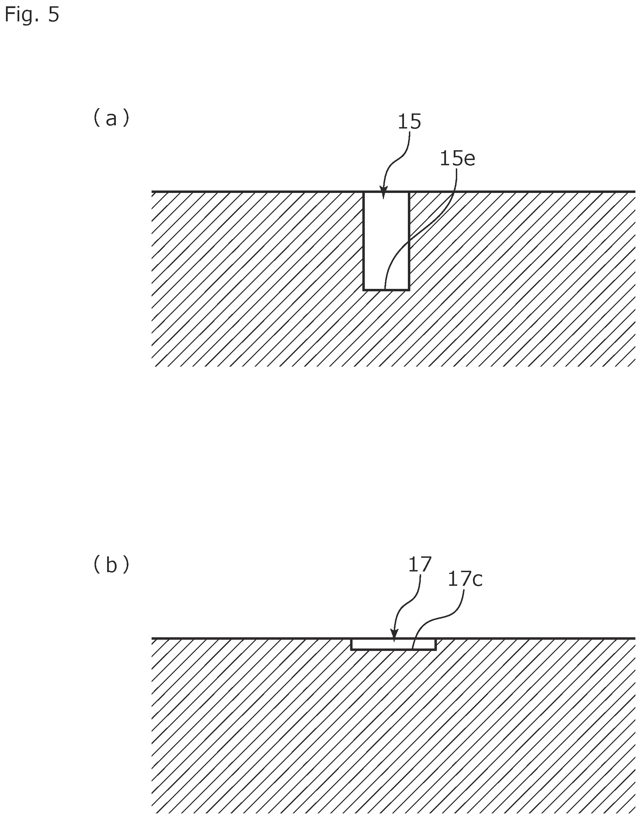

As illustrated in FIG. 5A, the cross section of the radially-inner-side introduction groove portions 15 in the width direction has a substantially rectangular shape.

In addition, as illustrated in FIG. 5B, the cross section of the tip-side groove portions 17 in the width direction has a substantially rectangular shape.

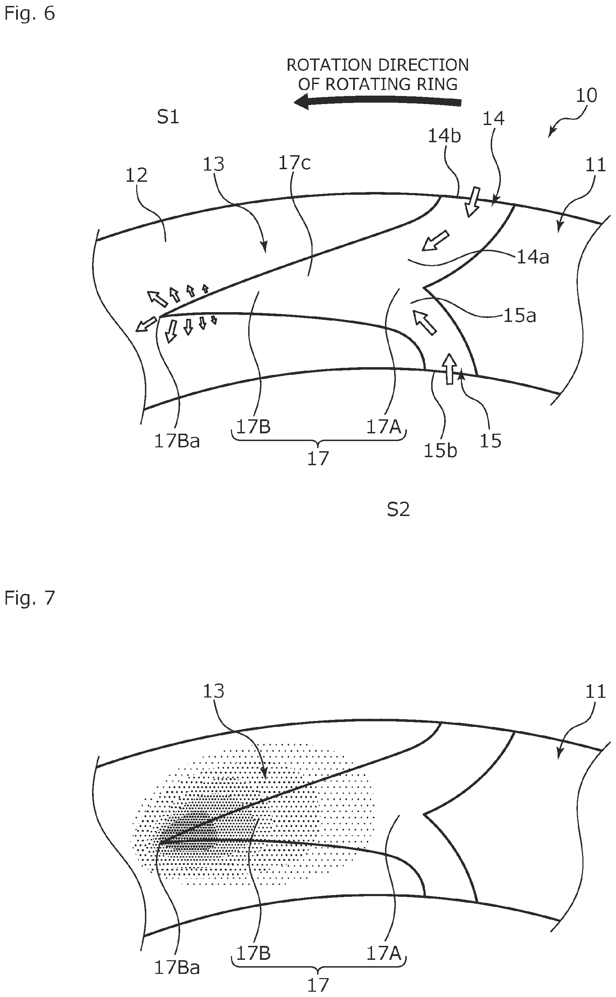

Next, the operation of the stationary ring 10 and the rotating ring 20 during relative rotation will be described with reference to FIGS. 6 and 7. Incidentally, in FIG. 7, the pressure distribution is illustrated with varying dot patterns, and the darker the dot pattern, the higher the pressure.

As illustrated in FIG. 6, when the rotating ring 20 rotates relative to the stationary ring 10 in the forward rotation direction, the fluid within the dynamic pressure generating grooves 13 follows and moves in the forward rotation direction of the rotating ring 20 due to shearing with the sliding surface 21.

Accordingly, fluid within the tip-side groove portions 17 moves from the junctions 17A toward the tips 17Ba of the tip portions 17B, and fluid within the radially-outer-side introduction groove portions 14 and the radially-inner-side introduction groove portions 15 moves toward the junctions 17A. In addition, fluid is introduced into the radially-outer-side introduction groove portions 14 from the outer space S1, and fluid is introduced into the radially-inner-side introduction groove portions 15 from the inner space S2.

The bottom surfaces 14e of the radially-outer-side introduction groove portions 14 and the bottom surfaces 15e of the radially-inner-side introduction groove portions 15 are inclined to be gradually shallower toward the bottom surfaces 17c of the tip-side groove portions 17. Therefore, fluid is likely to be guided from the radially inner ends 14a of the radially-outer-side introduction groove portions 14 and the radially outer ends 15a of the radially-inner-side introduction groove portions 15, which are relatively deeper than other portions of the dynamic pressure generating grooves 13, toward the tip-side groove portions 17.

In addition, since the inclination angle θ2 of the bottom surfaces 17c of the tip-side groove portions 17 is smaller than the inclination angle θ1 of the bottom surfaces 14e of the radially-outer-side introduction groove portions 14 and the bottom surfaces 15e of the radially-inner-side introduction groove portions 15, the tip-side groove portions 17 can be shallow over a wide range in the circumferential direction, thereby ensuring a positive pressure generating region widely in the circumferential direction.

In addition, the bottom surfaces 14e of the radially-outer-side introduction groove portions 14 and the bottom surfaces 15e of the radially-inner-side introduction groove portions 15 are flat surfaces, which allows for smooth fluid flow in the radially-outer-side introduction groove portions 14 and the radially-inner-side introduction groove portions 15.

In addition, the curvature of the side walls 14c of the radially-outer-side introduction groove portions 14 and the side walls 15c of the radially-inner-side introduction groove portions 15 is greater than the curvature of the side walls 14d of the radially-outer-side introduction groove portions 14 and the side walls 15d of the radially-inner-side introduction groove portions 15, and the radially inner ends 14a of the radially-outer-side introduction groove portions 14 and the radially outer ends 15a of the radially-inner-side introduction groove portions 15 face substantially in the forward rotation direction, so that fluid can be efficiently introduced toward the forward rotation direction.

In addition, the radially-outer-side introduction groove portions 14 and the radially-inner-side introduction groove portions 15 are disposed in the radial direction compared to the tip-side groove portions 17, and the tip-side groove portions 17 are disposed in the circumferential direction compared to the radially-outer-side introduction groove portions 14 and the radially-inner-side introduction groove portions 15. Therefore, the circumferential lengths L1, L1' of the radially-outer-side introduction groove portions 14 and the radially-inner-side introduction groove portions 15 are reduced, and the circumferential length L2 of the tip-side groove portions 17, namely, the positive pressure generating region, can be greatly ensured.

In addition, since the radial lengths L10, L20 of the side walls 14c and the side walls 15c are shorter than the radial lengths L11, L21 of the side walls 14d and the side walls 15d, fluid is likely to be introduced into the tip-side groove portions 17 from the outer space S1 and the inner space S2.

The bottom surfaces 17c of the tip-side groove portions 17 are gradually shallower from the junctions 17A toward the tip portions 17B, so that the pressure of the fluid within the tip-side groove portions 17 gradually increases toward the tip portions 17B.

In addition, since the bottom surfaces 17c of the tip-side groove portions 17 are connected to the lands 12 in the circumferential direction in a smooth curve, fluid is likely to be guided from the tips 17Ba of the tip portions 17B of the tip-side groove portions 17 in the circumferential direction, namely, from the tip portions 17B in the circumferential direction, toward the adjacent lands 12.

In addition, since the tip portions 17B are tapered in the forward rotation direction, large positive pressure can be generated at the tips 17Ba of the tip portions 17B.

Accordingly, positive pressure can be generated over a wide range in the circumferential direction of the tip portions 17B of the dynamic pressure generating grooves 13 and the vicinity thereof.

Specifically, as illustrated in FIG. 7, the largest positive pressure is generated in the vicinity of the tips 17Ba of the tip portions 17B of the dynamic pressure generating grooves 13, and the positive pressure gradually decreases as it spreads around the tip portions 17B. Particularly, the range in which positive pressure is generated on the relative rotation upstream side of the tips 17Ba of the tip portions 17B of the tip-side groove portions 17 is larger than the range in which positive pressure is generated on the relative rotation downstream side of the tips 17Ba of the tip portions 17B. Incidentally, almost no positive pressure is generated in the vicinity of the junctions 17A. Accordingly, while positive pressure is generated over a wide range in the circumferential direction, obstruction of the fluid flowing from the radially-outer-side introduction groove portions 14 and the radially-inner-side introduction groove portions 15 to the junctions 17A is avoided.

The force of the positive pressure generated at and near the tip portions 17B of the dynamic pressure generating grooves 13 causes the sliding surfaces 11, 21 to be slightly spaced apart from each other, and fluid is introduced between the sliding surfaces 11, 21, improving lubrication.

In addition, since the positive pressure generating region is widely ensured, positive pressure can be generated over a wide range in the circumferential direction between the sliding surfaces 11, 21. Therefore, the displacement when the rotating ring 20 floats relative to the stationary ring 10 in the direction in which the sliding surfaces 11, 21 are spaced apart from each other is reduced, and the sliding between the sliding surfaces 11, 21 is stabilized.

In addition, since the curvature of the side walls 17a, 17b of the tip-side groove portions 17 is smaller than the curvature of the side walls 14d of the radially-outer-side introduction groove portions 14 and the side walls 15d of the radially-inner-side introduction groove portions 15, and they extend in an almost straight line, the lands 12 around the positive pressure generating region can be widely ensured, reducing the displacement when the rotating ring 20 floats relative to the stationary ring 10 in the direction where the sliding surfaces 11, 21 are spaced apart from each other, and stabilizing sliding between the sliding surfaces 11, 21.

In addition, the side walls 14d and the side walls 15d are connected in a substantially V-shape when viewed in the axial direction, and the tips 17Ba of the tip portions 17B of the dynamic pressure generating grooves 13 are provided downstream in the forward rotation direction at substantially the same position in the radial direction as the valleys between the side walls 14d and the side walls 15d. Accordingly, the fluid discharged in the forward rotation direction from the tips 17Ba of the tip portions 17B of the dynamic pressure generating grooves 13, namely, onto the lands 12 is prevented from being immediately recovered in the radially-outer-side introduction groove portions 14 and radially-inner-side introduction groove portions 15 on the downstream side, so that positive pressure can be reliably generated between the dynamic pressure generating grooves 13 adjacent in the circumferential direction.

Incidentally, in the present embodiment, a mode in which the radially-outer-side introduction groove portions 14 and the radially-inner-side introduction groove portions 15 have substantially the same cross-sectional shape has been provided as an example; however, the present invention is not limited thereto, they may have different depths or different bottom shapes, for example, one may be flat and the other may be curved.

In addition, the bottom surfaces 14e of the radially-outer-side introduction groove portions 14 and the bottom surfaces 15e of the radially-inner-side introduction groove portions 15 are not limited to being flat, and may be protruded or recessed on one side in the axial direction in cross section to be shallower toward the tip portions, or may be stepped to be shallower toward the tip portions.

In addition, in the present embodiment, a mode in which the tips 17Ba of the tip portions 17B are disposed in the vicinity of the center in the radial direction of the sliding surface 11 has been provided as an example; however, they may be disposed closer to one side in the radial direction.

### {Second embodiment}

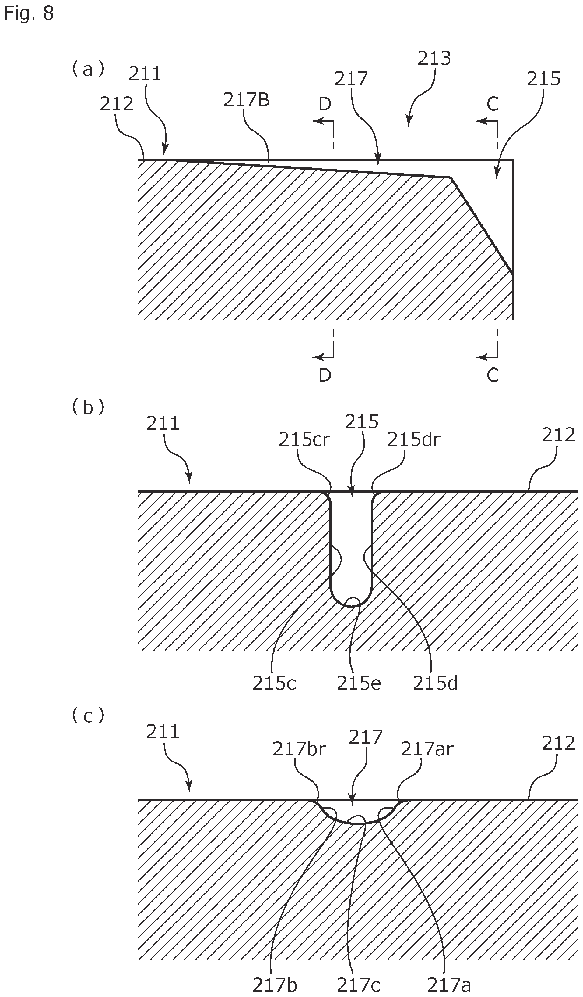

Next, a sliding component according to a second embodiment of the present invention will be described with reference to FIG. 8. Incidentally, the description of configurations that are the same as and overlap with the configurations of the first embodiment will be omitted.

As illustrated in FIG. 8A, dynamic pressure generating grooves 213 of the second embodiment has a cross-sectional shape along the extending direction of a portion from radially-inner-side introduction groove portions 215 to tip portions 217B of tip-side groove portions 217, which has substantially the same shape as the dynamic pressure generating grooves 13 of the first embodiment.

As illustrated in FIG. 8B, the radially-inner-side introduction groove portions 215 have a substantially U-shaped cross section in the width direction. Side walls 215c, 215d of the radially-inner-side introduction groove portions 215 in the width direction have rounded portions 215cr, 215dr at their upper portions, and are connected to lands 212 located on opposite sides in the width direction in a smooth curve. Accordingly, fluid is likely to be introduced into the radially-inner-side introduction groove portions 215 from opposite sides of the radially-inner-side introduction groove portions 215 in the width direction.

In addition, the side walls 215c, 215d are also connected to bottom surfaces 215e of the radially-inner-side introduction groove portions 215 in a smooth curve. Accordingly, fluid is less likely to stagnate in the vicinity of the bottom surfaces 215e of the radially-inner-side introduction groove portions 215, and the fluid can flow smoothly in the forward rotation direction.

As illustrated in FIG. 8C, the tip-side groove portions 217 have a substantially U-shaped cross section in the width direction. The side walls 217a, 217b of the tip-side groove portions 217 in the width direction have rounded portions 217ar, 217br at their upper portions, and are connected to the lands 212 located on opposite sides in the width direction in a smooth curve. Accordingly, the fluid flowing through the tip-side groove portions 217 in the circumferential direction gradually increases in pressure toward tips 217Ba of the tip-side groove portions 217 while also being guided to opposite sides in the radial direction, thereby effectively increasing the positive pressure and improving the floating effect.

In addition, the side walls 217a, 217b are also connected to bottom surfaces 217c of the tip-side groove portions 217 in a smooth curve. Accordingly, the fluid is less likely to stagnate in the vicinity of the bottom surfaces 217c of the tip-side groove portions 217, and the fluid can flow smoothly in the forward rotation direction.

Incidentally, in the second embodiment, a mode in which the bottom surfaces 215e of the radially-inner-side introduction groove portions 215 and the bottom surfaces 217c of the tip-side groove portions 217 have a substantially U-shaped cross section in the width direction has been provided as an example; however, they may have a substantially V-shaped cross section. In addition, the cross section is not limited to being symmetrical in the width direction, and may be asymmetrical.

### {Third embodiment}

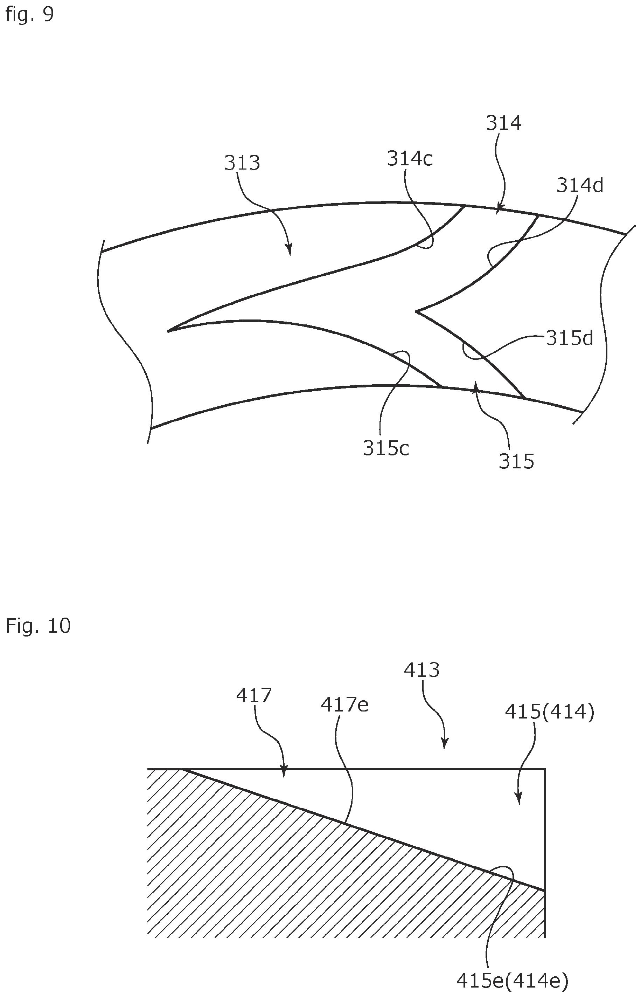

Next, a sliding component according to a third embodiment of the present invention will be described with reference to FIG. 9. Incidentally, the description of configurations that are the same as and overlap with the configurations of the first embodiment will be omitted.

As illustrated in FIG. 9, in dynamic pressure generating grooves 313 of the third embodiment, side walls 314c and side walls 314d of the radially-outer-side introduction groove portions 314 extend substantially parallel to each other, and side walls 315c and side walls 315d of the radially-inner-side introduction groove portions 315 extend substantially parallel to each other.

Accordingly, the fluid flow in the radially-outer-side introduction groove portions 314 and the radially-inner-side introduction groove portions 315 can be stabilized.

### {Fourth embodiment}

Next, a sliding component according to a fourth embodiment of the present invention will be described with reference to FIG. 10. Incidentally, the description of configurations that are the same as and overlap with the configurations of the first embodiment will be omitted.

As illustrated in FIG. 10, in dynamic pressure generating grooves 413 of the fourth embodiment, bottom surfaces 415e of radially-inner-side introduction groove portions 415 (namely, bottom surfaces 414e of the radially-outer-side introduction groove portions 414) and bottom surfaces 417e of tip-side groove portions 417 are connected to each other at the same inclination angle. Accordingly, the size of the positive pressure generating region can be adjusted according to the circumferential length of the dynamic pressure generating grooves 413.

### {Fifth embodiment}

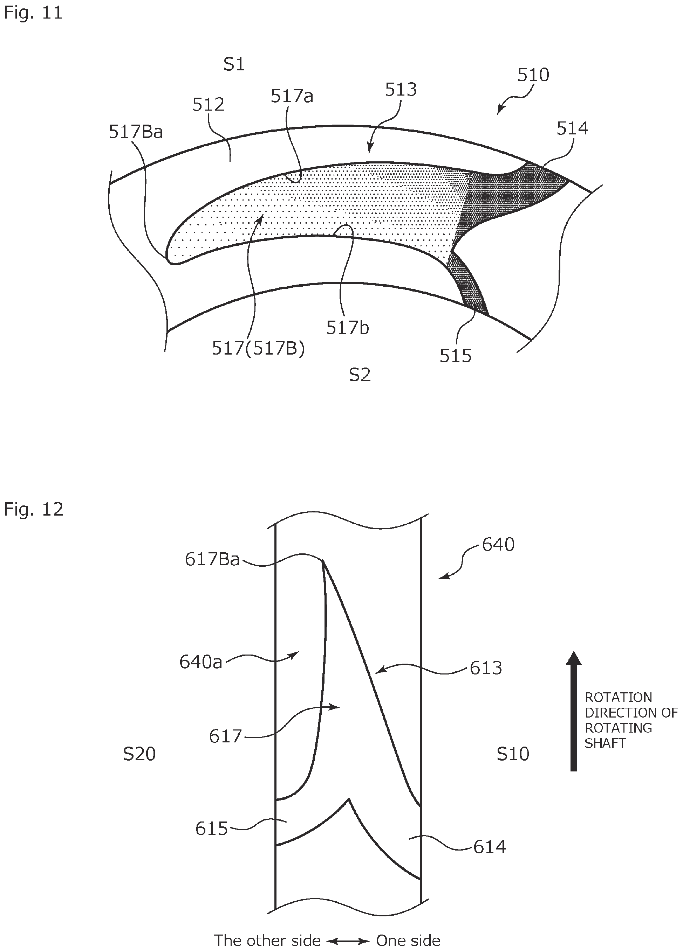

Next, a sliding component according to a fifth embodiment of the present invention will be described with reference to FIG. 11. Incidentally, the description of configurations that are the same as and overlap with the configurations of the first embodiment will be omitted.

Referring to FIG. 11, the lubricating oil within the outer space S1 of a stationary ring 510 of the fifth embodiment is at a higher pressure than the lubricating oil in the inner space S2. Incidentally, in FIG. 11, the change in the depth of dynamic pressure generating grooves 513 is schematically illustrated with varying dot patterns, with the darker the dot patterns, the deeper the grooves.

In the dynamic pressure generating grooves 513 of the fifth embodiment, radially-outer-side introduction groove portions 514 are wider and longer in the extending direction than radially-inner-side introduction groove portions 515. In other words, the radially-outer-side introduction groove portions 514 on the high-pressure side have larger volume than the radially-inner-side introduction groove portions 515 on the low-pressure side. Therefore, high-pressure lubricating oil is likely to be introduced into the tip-side groove portions 517, enhancing the dynamic pressure generating effect.

In addition, side walls 517a of the tip-side groove portions 517 on the radially outer side have a greater curvature than side walls 517b on the radially inner side. In addition, the tip-side groove portions 517 are wider in the radial direction, in other words, in the direction perpendicular to the extending direction, compared to the tip-side groove portions 17 of the first embodiment.

In addition, the dynamic pressure generating grooves 513 are gradually deeper from tips 517Ba of tip portions 517B of the tip-side groove portions 517 toward the radially-outer-side introduction groove portions 514 and the radially-inner-side introduction groove portions 515. Specifically, the dynamic pressure generating grooves 513 is gradually deeper from the tips 517Ba toward the radially-outer-side introduction groove portions 514 and the radially-inner-side introduction groove portions 515 so that the high-pressure side is deeper. Namely, the dynamic pressure generating grooves 513 are deeper from the radially inner side toward the radially outer side and toward the upstream side in the forward rotation direction, in other words, obliquely relative to the circumferential direction. In addition, the tip-side groove portions 517 are partitioned by the outer space S1, the inner space S2, and lands 512, and are in communication with the outer space S1 and the inner space S2 through the radially-outer-side introduction groove portions 514 and the radially-inner-side introduction groove portions 515. Therefore, during relative rotation, high-pressure lubricating oil is efficiently introduced along the side walls 517a of the tip-side groove portions 517, and positive pressure is likely to be relatively generated on the side of the side walls 517b of the tip-side groove portions 517. In addition, compared to the first embodiment, the positive pressure generated at the tips 517Ba of the tip portions 517B is larger, and the positive pressure generating region is narrower.

### {Sixth embodiment}

Next, a sliding component according to a sixth embodiment of the present invention will be described with reference to FIG. 12. Incidentally, the description of configurations that are the same as and overlap with the configurations of the first embodiment will be omitted.

As illustrated in FIG. 12, in the present embodiment, a plurality of dynamic pressure generating grooves 613 is formed on an inner peripheral surface 640a of a radial bearing 640 (only one is illustrated in FIG. 12). The dynamic pressure generating grooves 613 include one-side introduction groove portions 614 that communicate with one space S10 on one side in the axial direction, other-side introduction groove portions 615 that communicate with other-side space S20 on the other side in the axial direction, and tip-side groove portions 617 that extend on the relative rotation downstream side from the one-side introduction groove portions 614 and the other-side introduction groove portions 615. The tip-side groove portions 617 are gradually shallower from the one-side introduction groove portions 614 and the other-side introduction groove portions 615 toward tips 617Ba.

Incidentally, a mode in which the radial bearing is fixed to the housing has been provided as an example; however, it may be fixed to the rotating shaft. In this case, the radial bearing may have a dynamic pressure generating groove on its outer peripheral surface.

The embodiments of the present invention have been described above with reference to the drawings; however, the specific configurations are not limited to the embodiments, and changes or additions that are made without departing from the scope of the present invention are included in the present invention.

For example, in the first to sixth embodiments described above, a mode in which the dynamic pressure generating grooves are gradually shallower from the introduction portions toward the tip portions has been provided as an example; however, the introduction portions may be deep grooves with a constant depth, and the tip portions may be shallow grooves with a constant depth. Namely, the dynamic pressure generating grooves may have at least one portion with different depths, and the tip portions may be shallower than the introduction portion.

In addition, in the first to sixth embodiments described above, a mode in which the radially-outer-side introduction portions communicate with the outer space and the radially-inner-side introduction portions communicate with the inner space has been provided as an example; however as long as the fluid can be introduced between the sliding surfaces, at least one of the radially-outer-side introduction portions and the radially-inner-side introduction portions may not communicate with the outer space or the inner space.

In addition, in the first to sixth embodiments described above, a mode in which the tip portions of the dynamic pressure generating grooves and the lands are smoothly connected to each other in the circumferential direction has been provided as an example; however, surfaces rising in the depth direction may be formed between the tip portions of the dynamic pressure generating grooves and the lands.

In addition, in the first to sixth embodiments described above, the radially-outer-side introduction portions and the radially-inner-side introduction portions have a substantially arc-shape when viewed in the axial direction. However, for example, the radially-outer-side introduction portions and the radially-inner-side introduction portions may extend in a straight line while being inclined in the forward rotation direction, or one may be straight and the other may be arc-shaped.

In addition, in the first to sixth embodiments described above, a mode in which the ten dynamic pressure generating grooves are equiangularly arranged in the circumferential direction has been provided as an example; however, the arrangement may be freely changed depending on the usage environment, or the like.

In addition, in the first to sixth embodiments described above, a mode in which the sliding member is annular has been provided as an example; however, the present invention is not limited thereto, and it may be, for example, a disk-shaped sliding member.

In addition, in the first to sixth embodiments described above, the sliding component suitable for thrust bearings has been described; however, the sliding component may be used in mechanical seals for automobiles, general industrial machinery, or the like, or plain bearings.

In addition, the fluid for lubrication may be liquid or gas, or may be a mixture of liquid and gas in the form of a mist.

In addition, in the first to sixth embodiments described above, a mode in which the same fluid is present in the outer space and the inner space has been provided as an example; however, different fluids that are allowed to mix may be present, or the fluids may have different pressures.

In addition, in the first to sixth embodiments described above, a mode in which no positive pressure is generated at the junctions of the tip-side groove portions has been provided as an example; however, positive pressure may be generated at the junctions.

### {REFERENCE SIGNS LIST}

1 Rotating shaft
3 Thrust bearing (sliding component)
10 Stationary ring
11 Sliding surface
12 Land
13 Dynamic pressure generating groove
14 Radially-outer-side introduction groove portion (first or second introduction portion)
14e Bottom surface
15 Radially-inner-side introduction groove portion (second or first introduction portion)
15e Bottom surface
17 Tip-side groove portion
17A Junction
17B Tip portion
17Ba Tip
17c Bottom surface
S1 Outer space (first or second space)
S2 Inner space (second or first space)
θ1, θ2 Inclination angle

## Claims

1. A sliding component disposed between a housing and a shaft that extends through the housing and having a pair of sliding surfaces that rotate relative to each other, wherein
one of an outer diameter side space and an inner diameter side space of the sliding surfaces is a first space, remaining one of the outer diameter side space and the inner diameter side space of the sliding surfaces is a second space,
at least one of the sliding surfaces is provided with a dynamic pressure generating groove having a first introduction portion that is disposed on a first space side and that communicates with the first space, a second introduction portion that is disposed on a second space side and that communicates with the second space, and a tip portion where the first introduction portion and the second introduction portion meet on a relative rotation downstream side, and
the dynamic pressure generating groove is shallower on a side of the tip portion than on a side of the first introduction portion and on a side of the second introduction portion.

2. The sliding component according to claim 1, wherein
the dynamic pressure generating groove is gradually shallower from at least one of the first introduction portion and the second introduction portion toward the tip portion.

3. The sliding component according to claim 1, wherein
the tip portion has a bottom surface connected to a top surface of a land smoothly and curvedly in a circumferential direction.

4. The sliding component according to claim 1, wherein
the tip portion has a bottom surface connected to a top surface of a land smoothly and curvedly in a radial direction.

5. The sliding component according to claim 2, wherein
an inclination angle of a bottom surface of at least one of the first introduction portion and the second introduction portion with respect to a top surface of a land is larger than an inclination angle of a bottom surface of the tip portion with respect to the top surface of the land.

6. The sliding component according to claim 1, wherein
at least one of the first introduction portion and the second introduction portion is disposed along a radial direction, and the tip portion is disposed along a circumferential direction.

7. The sliding component according to any one of claims 1 to 6, wherein
the tip portion is tapered toward a tip end thereof.

8. The sliding component according to claim 1, wherein
the first introduction portion is wider and longer than the second introduction portion.

9. The sliding component according to claim 8, wherein
the tip portion is deeper on the side of the first introduction portion than on the side of the second introduction portion.
